(19) Europäisches Patentamt
European Patent Office
Office européen des brevets

(11) **EP 1 702 773 B1**

(12) **EUROPEAN PATENT SPECIFICATION**

(45) Date of publication and mention
of the grant of the patent:
**05.11.2008 Bulletin 2008/45**

(51) Int Cl.:
***B60G 21/00*** *(2006.01)*

(21) Application number: **06251444.3**

(22) Date of filing: **17.03.2006**

(54) **Laterally-leaning vehicle**

Seitenneigungs-Fahrzeug

Véhicule à inclinaison latérale

(84) Designated Contracting States:
**AT BE BG CH CY CZ DE DK EE ES FI FR GB GR HU IE IS IT LI LT LU LV MC NL PL PT RO SE SI SK TR**

(30) Priority: **17.03.2005 GB 0505527**

(43) Date of publication of application:
**20.09.2006 Bulletin 2006/38**

(73) Proprietor: **The Narrow Car Company Limited Abercynon CF45 4SN (GB)**

(72) Inventors:
• **Kemp, Hugh**
**c/o The Narrow Car Company LTD**
**Arbercynon CF45 4SN**
**Wales (GB)**

• **Harty, Damian Andrew**
**c/oThe Narrow Car Com. LTD**
**Arbercynon CF45 4SN**
**Wales (GB)**

(74) Representative: **Chettle, Adrian John et al**
**Withers & Rogers LLP**
**Goldings House**
**2 Hays Lane**
**London**
**SE1 2HW (GB)**

(56) References cited:
**EP-A- 0 453 771          WO-A-99/47372**
**US-A- 5 662 356**

**Description**

The present invention relates to an improved suspension system for a free-leaning vehicle wherein the vehicle is provided with a passenger carrying portion which is tiltable relative to a ground engaging steering mechanism to assist in the steering of the vehicle along a desired path. In particular, though not exclusively, the invention is directed to a four wheeled passenger vehicle. A method of steering a vehicle is also disclosed.

It is known that vehicles that are tall compared to their width are prone to roll instability. This is due to the fact that the lateral forces required to travel in a circular path are applied a long way below the centre of gravity of the vehicle compared with the difference in vertical force at the wheels available to resist the resulting couple. There is a perceived need to provide small vehicles to conduct journeys within an urban environment, such as a city, where traffic congestion is a problem. For such a vehicle to be able to thread through informal gaps in traffic, it must have a small width. In order to give view to assist planning a route through traffic congestion it must be tall. Such vehicles are thus susceptible to the instability problem noted above.

One solution to the problem of roll instability is to ballast the vehicle so as to lower the centre of gravity of the vehicle. This solution however can lead to a vehicle which is too heavy. Another solution is to make the vehicle lean into the corner in order to make the vehicle lean into the corner in order to offset the moment applied by the lateral forces at ground level, using the weight of the vehicle offset from the reaction force on the ground.

WO 99/47372 discloses a leaning vehicle with steering mode.

According to an aspect of the present invention there is provided a method of controlling the operation of a free leaning vehicle, the vehicle having a body, a plurality of ground engaging supports of which at least some are movable so as to effect steering of the vehicle, and a roll brake operable to selectively prevent or allow the body and steerable supports to tilt relative to the ground,
wherein the vehicle further includes a control system configured to effect movement of the steerable supports and the operation of the roll brake, the control system including a steering input means operable by an operator of the vehicle to effect steering inputs to the vehicle, a steering output means operable by the control system to move the steerable supports in either a pro-steer mode where the steerable supports move in the same direction as a steering input made to the steering input means, or a counter-steer mode where the steerable supports move in a counter direction to a steering input made to the steering input means, and a plurality of sensors arranged on the vehicle to provide the control system with information relating to operative parameters of the vehicle, wherein the control system is arranged to permit the vehicle to operate in one of two steering modes comprising;

a first steering mode where the roll brake is engaged so as to prevent tilting of the vehicle and the steerable supports are movable only in the pro-steer mode; and

a second steering mode where the roll brake is disengaged so as to permit tilting of the vehicle and the steerable supports, and the steerable supports are movable in both the pro-steer and counter-steer modes,

the control system being arranged to select and switch between the steering modes in relation to demand for the roll brake as determined by the by the control system in response to sensed operative parameters of the vehicle.

A vehicle which operates in accordance with the above described method is able to transition between a free-leaning counter-steer mode and a roll-stiff pro-steering mode automatically and without the intervention of the vehicle operator. The placing of the vehicle in one of the two modes and the subsequent switching between modes is triggered only be the roll brake demand as determined by the control system. This autonomous mode switching means that the operator needs no knowledge of the vehicle capability or operating characteristics. The operation of the vehicle is thus both autonomous and instinctive.

The operative parameters of the vehicle sensed by the control system may include one or more of vehicle speed in the direction of travel, vehicle acceleration in the direction of travel, vehicle tilt angle, rate of change of vehicle tilt angle, vertical acceleration of the vehicle, lateral acceleration of the vehicle, steering inputs made to the steering input means, and steering angle of the steerable supports. In a preferred embodiment the control system is configured to apply the roll brake as the vehicle comes to a stop so as to prevent tilting of the vehicle. The control system may further be configured to apply the roll brake at low speed where sensed operative parameters of the vehicle indicate to the control system that uncontrolled tilting of the vehicle is likely to occur.

Advantageously the control system may be configured to apply the roll brake when the control system senses the vehicle to be tilting below a predetermined tilt angle. The predetermined tilt angle may be related to the speed of the vehicle in the direction of travel.

A further advantageous feature of the present invention is the ability of the roll brake to act as a roll damper. Where the vehicle is in the second steering mode, the control system may be configured to operate the roll brake to counteract unwanted tilting of the vehicle due to externally applied forces such as wind loading. The control system may act to engage the roll brake partially until it is sensed that the externally applied forces promoting unwanted tilting of the vehicle are no longer present, whereafter the roll brake is disengaged by the control system. Alternatively, the control system may act engage the roll brake fully until it is sensed that the externally applied forces promoting unwanted tilting of the vehicle are no longer present, whereafter the roll brake is disengaged by the control system.

In instances where the vehicle is in the second steering mode, the control system may configured to limit the tilt angle of the vehicle irrespective of the steering input made by an operator to the steering input means. The degree by which the tilt angle is limited is preferably variable and related to vehicle speed in the direction of travel. This feature of reduced tilt angle demand ensures that the vehicle does not topple over when travelling at relatively low speeds which in free leaning mode.

According to a further aspect of the present invention there is provided a transport platform, more especially a road vehicle, including at least four supports for supporting the platform on the ground, a frame for carrying passengers, the frame housing seating, a propulsion means, suspension means between the supports and the frame and a steering mechanism operable to move at least two of the supports, the suspension means being arranged so that during travel, as the platform negotiates changes in direction or bends, the frame is freely tiltable relative to the steerable supports so as to be inclined relative to the ground surface in the manner of a cycle, wherein the suspension means are arranged so that during travel of the platform below a predetermined speed, the suspension means is lockable in or near an upright position to prevent tilting.

The locking means may include a brake which engages the suspension means to prevent tilting, and control means to sense, inter alia, the speed of forward travel of the platform whereby to actuate the brake. The brake may be operable at speeds of travel above the predetermined speed to counteract unwanted tilting action of the platform, for example under the influence of side winds, actuation of the brake being undertaken by the control means upon sensing parameters of the platform, which parameters are selected from forward speed, steering angle, tilt angle of the frame relative to the steerable supports and the rate of change of tilt angle of the frame relative to the steerable supports.

The control means may also be operable to assist in steering of the platform at speeds above the predetermined speed by initially counter steering the steerable supports to promote tilting of the frame to a desired tilt angle and then pro-steering the steerable supports to maintain the frame at the desired tilt angle and cause the platform to travel along an intended path.

The control means may further be operable to lock the suspension means when the vehicle is below a certain bank angle. This ensures that the if the vehicle is leaned over, the locking means will not prematurely engage and cause the bank angle to be "locked in" unnecessarily. In instances where the vehicle slows and returns to upright due to the maximum roll angle scheduling, the locking means will engage when the vehicle is close enough to upright to ensure its stability under all likely cross-fall (road-gradient) conditions. The bank angle schedule by which operation of the locking means is governed is also dependent upon the vehicle speed. Accordingly the locking means may operated below a predetermined vehicle speed irrespective of the bank angle of the vehicle.

According to a further aspect of the present invention there is provided a steering system for a free leaning vehicle wherein the vehicle body and the steerable ground engaging means of the vehicle are tiltable, the steering system including a suspension braking arrangement, a steering input device operable by a driver of the vehicle to steer the steerable ground engaging means, a plurality of sensors operable to sense operational parameters of the vehicle including vehicle speed and acceleration, vehicle tilt angle and acceleration, lateral and vertical acceleration, driver steering input, and steering angle of the steerable ground engaging means, a steering mechanism operable to steer the steerable ground engaging members, and a controller arranged to receive inputs from the sensors and provide outputs to operate the steering mechanism and suspension system braking arrangement.

According to yet a further aspect of the present invention there is provided a method of steering a free leaning vehicle wherein the vehicle is tiltable relative to the ground, the method comprising the steps of:

providing a free leaning vehicle having a steering system of the type described above;
providing a steering input at the steering input device;
determining from the steering input and dynamic state of the vehicle the required movement of the steerable ground engaging means and tilt angle of the vehicle; and
operating the steering mechanism and suspension system braking arrangement to achieve the required movement of the steerable ground engaging means and tilt angle.

The method may include the step of determining the speed of the vehicle to be below a first predetermined value and limiting the permissible tilt angle of the vehicle irrespective of the input made at the steering input device. Where the speed of the vehicle is determined to be above the first predetermined value the limit on tilt angle is removed with the vehicle able to tilt, where necessary, to its maximum extent as limited by, for example, stops provided on the vehicle body.

Where the speed of the vehicle is determined to be below a second predetermined value, the second predetermined value being lower than the first predetermined value, the suspension braking arrangement may be operated so as to prevent tilting of the vehicle and any steering input made to the steering input device is relayed to the steerable ground engaging means without modification or alteration.

Where tilting of the vehicle is determined to be required, the method may include the additional steps of:

causing the steering mechanism to counter steer the steerable ground engaging means so as to cause the vehicle to tilt to the required tilt angle;

causing the steering mechanism to pro steer the steerable ground engaging means to maintain the body and the required tilt angle and the vehicle travel in the direction required by the driver; and, optionally, operating the suspension system braking arrangement as the vehicle subsequently tilts towards the vertical as the steering input at the steering input device is removed to arrest the vehicle in the vertical position.

According to another aspect of the present invention there is provided a roll damping arrangement for a free leaning vehicle wherein the vehicle is tiltable relative to the ground, the roll damping arrangement comprising a suspension arrangement having a suspension braking arrangement, a sensor arranged to sense the tilt angle and acceleration of the vehicle body relative to the suspension arrangement, a controller arranged to receive inputs from the sensor and provide an output to operate the suspension system braking arrangement.

The suspension braking arrangement is operable at speeds of travel above the first predetermined speed to counteract unwanted tilting action of the platform, for example under the influence of side winds, actuation of the brake being undertaken by the controller upon sensing parameters of the platform, which parameters are selected from forward speed, steering angle, tilt angle of the vehicle relative to the ground and the rate of change of tilt angle of the vehicle relative to the ground

An embodiment of the present invention will now be described with reference to the accompanying drawings in which:

Figures 1a to 1c show a schematic representation of a front suspension arrangement;
Figures 2a to 2c show a schematic representation of a front suspension arrangement including a roll brake.
Figure 3 shows a schematic representation of a steering system for a free leaning vehicle according to an aspect of the present invention; and
Figure 4 shows a graph of vehicle bank angle against vehicle speed.

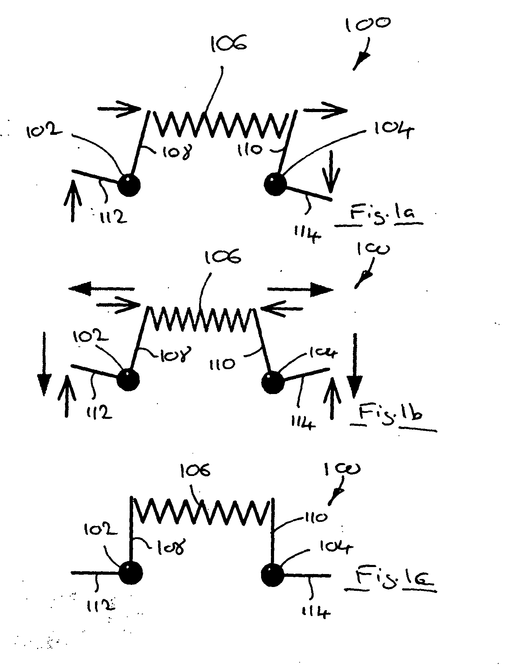

For a free leaning vehicle of the type described in the introduction above, it is highly advantages for the vehicle to be provided with a front suspension arrangement, generally designated 100, shown schematically in figures 1a to 1c. The arrangement 100 is configured to decouple roll and heave motion. The arrangement 100 comprises a pair of bell cranks 102,104 which are coupled by a spring 106 extending between respective arms 108,110 of the bell cranks 102,104. It will be understood that the cranks 102,104 may be considered to be mounted to the body of a vehicle and the wheels of the vehicle connected either directly or indirectly to the free arms 112,114 of the cranks 102,104. It will be understood that the free arms 112,114 may be considered to represent steerable axles of a vehicle fitted with the suspension system

Where heave motion is experienced by the arrangement 100, both cranks 102,104 move in counter directions as shown in figure 1b. The distance between the spring carrying arms 108,108 changes and the spring 106 is either elongated or compressed. The spring 106 thus produces a heave reaction to the motion of the bell cranks 102,104. Where roll motion is experienced by the arrangement 100, both cranks 102,104 move in the same direction as shown in figure 1a. The spring 106 moves bodily but is not distorted and hence no reaction force is applied to the bell cranks 102,104. For compound heave and roll motion the behaviour of the arrangement 100 is determined by the sum of the heave and roll components.

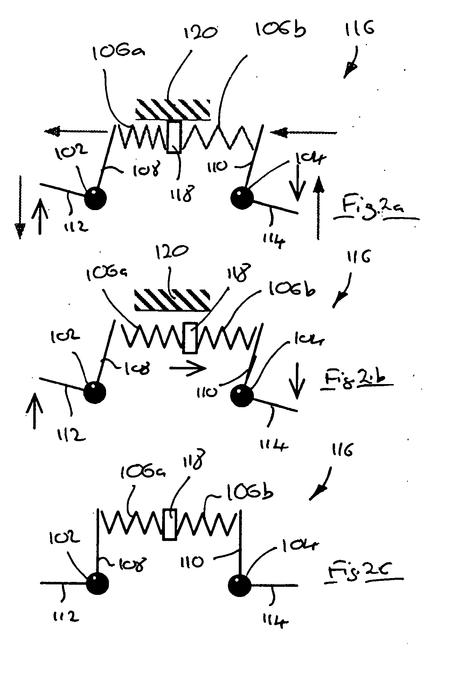

Advantageously the suspension arrangement described with reference to figures 1a to 1c may be provided with a roll brake. Figures 2a to 2c which show a simplified suspension arrangement 116 similar to that shown in figures 1a to 1c. Features common to the arrangement 100 of figures 1a to 1c are identified with like reference numerals. The arrangement 116 differs in that the spring 106 is separated into two halves 106a, 106b and is provided with a braking member 118 therebetween. The braking member 118 may be moved into contact with a non-movable base member 120 to prevent translational movement of the spring halves 106a,106b when roll motion is experienced by the bell cranks 102,104. As can be seen from figure 2a movement of both cranks 102,104 in the same direction when the braking member 118 is engaged with the base 120 causes compression of one spring half 106a and compression of the other spring half 106b. The respective compression and extension of the spring halves 106a,106b provides the suspension arrangement 116 with roll resistance. With the braking member 118 disengaged from the base 120 (figure 2b) the arrangement 116 is not provided with roll resistance in a similar manner to that described with reference to the arrangement 100 of figure 1b.

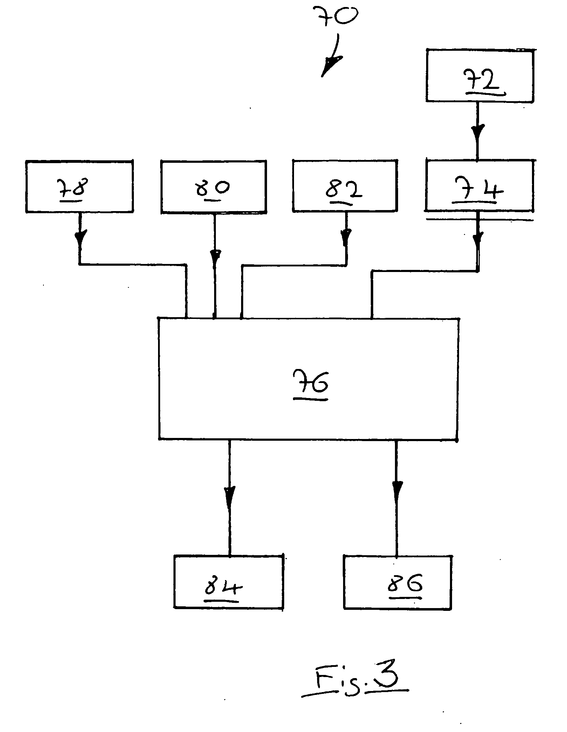

Referring now to figure 3 there is shown a schematic representation of a steering and stability system generally designated 70. The system 70 comprises a steering yoke 72 connected to a steering input sensor 74. The sensor 74 is in turn connected to a controller 76. The controller 76 is also configured to receive inputs from a plurality of sensors 78, 80, 82 which provide information on the dynamic state of the vehicle to the controller 76. The dynamic state sensors 78,80,82 may be configured to measure such parameters as, for example, the speed and acceleration/deceleration of the vehicle, the roll angle and rate of acceleration/deceleration of roll of the vehicle, lateral and vertical acceleration, and the current steering angle of the steerable axles 112,114.

The controller 76 is arranged to supply outputs to a steering adjustment mechanism 84 and a roll brake actuation mechanism 86. The steering adjustment mechanism 84 may be arranged to supplement steering input generated by a driver of the vehicle at the steering yoke 72. The steering yoke 72 may be mechanically connected to the steerable axles 112,114 of the vehicle via a steering rack. The steering adjustment mechanism 84 may be arranged to move the steerable axles 112,114 independently of the steering input made by the driver by, for example, moving the steering rack relative to its mounting points within the vehicle. In an alternative embodiment the steering arrangement of the vehicle may be configured such that there is no direct mechanical connection between the steering yoke 72 and the steerable axles 112,114.

The steering and stability system 70 may be operated in a number of modes. A first mode of operation is that of roll stability which is enabled by the operation of the roll brake 118. It will be understood that in instances where the roll brake 118 is not activated than the vehicle as a whole has no discernible roll stiffness. This characteristic is problematic at low speeds and when the vehicle is stationary as it will have a tendency to tip over. This problem may be mitigated by the use of the roll brake 118. The controller 76 is configured to apply the roll brake 118 when the vehicle is stationary or is determined by the sensors 78,80, 82 to be travelling at a speed below a lower threshold value of, for example, 1 mph. The application of the roll brake 118 in such situations provides the vehicle with sufficient roll stiffness to prevent the stationary and low speed tipping problem described above. In the situations where the vehicle is decelerating and the vehicle is tipped relative to the front suspension, for example due to cornering of the vehicle or the gradient of the surface over which the vehicle is travelling, then the controller 76 will cause the roll brake 118 to apply when the vehicle decelerates below a predetermined speed. In such circumstances the roll brake 118 will apply irrespective of the roll angle of the vehicle to ensure that the vehicle body does not roll to its stops.

A further operative mode of the steering and stability system 70 is that of roll damping. During operation of the vehicle the body of the vehicle maybe caused to roll due to external factors such as, for example, changes in the inclination of the surface over which the vehicle is travelling or external loadings from cross winds or the like. In such a situation the roll brake 118 is operated by the controller 76 in response to the roll acceleration of the vehicle body exceeding a given threshold value. In such a situation operation of the roll brake 118 is proportional to the roll acceleration value detected by the sensors 78,80,82. It will be appreciated that the application of the roll brake 118 may be brief and/or partial.

The steering and stability system 70 may be further operated to steer the vehicle. As discussed above it is highly desirable to have the vehicle to tilt when cornering to offset the moment applied by the lateral forces at ground level. In a vehicle having a suspension assembly described with reference to figures 1, tilting of the vehicle may be effected by initial counter steering of the vehicle, which is to say turning the steerable axles 112,114 in a direction opposite to that in which it is intended to turn. Once the vehicle has tilted to a desired angle the front wheels are then turned in the direction it is intended to travel.

Steering of the vehicle in this manner may be effected by the steering and stability system 70. Taking the example of a vehicle travelling in a straight line, a driver of the vehicle may wish to make a turn and hence will move the steering yoke 72 accordingly. At the time at which the steering yoke 72 is moved, the controller 76 is already receiving information from the vehicle sensors 78,80,82 relating to the speed and current roll angle of vehicle. From the input received from the steering input sensor 74 the controller 76 is able to determine the radius of the turn that the vehicle has to make. The controller 76 is also able to calculate the amount by which the body of the vehicle will be required to tilt in order to offset the expected forces resulting from making such a turn at the current speed of the vehicle. The controller 76 thus instructs the steering adjustment mechanism 84 to counter steer the steerable axles 112,114 of the vehicle to cause the vehicle body to roll. The rate of roll and the roll angle are monitored by the sensors 78,80,82 and relayed to the controller 76.

As the vehicle approaches the required roll angle for the turn the controller 76 causes the steering adjustment mechanism 84 to steer the front axles 112,114 in the direction which the user desires the vehicle to turn in order to both turn the vehicle and maintain the desired roll angle. The maximum permitted roll angle of the vehicle is speed dependent.

The automated scheduling of demand using the steering adjustment mechanism 84 gives a reduced demand at low speeds and prevents the vehicle toppling when it is in roll control free leaning mode.

The following relationships provide the determining scheduling of adjustment in this operating region

The lateral acceleration, $A_y$, of a vehicle at low speed is determined by the path curvature, $k$, and forward speed, $v$:

$$A_y = v^2 k$$

This relationship becomes important when it is noted that the path curvature is determined by the maximum steering angle, $\delta$, and wheelbase, $l$, such that

$$k = \frac{\tan(\delta)}{l}$$

hence

$$A_y = v^2 \frac{\tan(\delta)}{l}$$

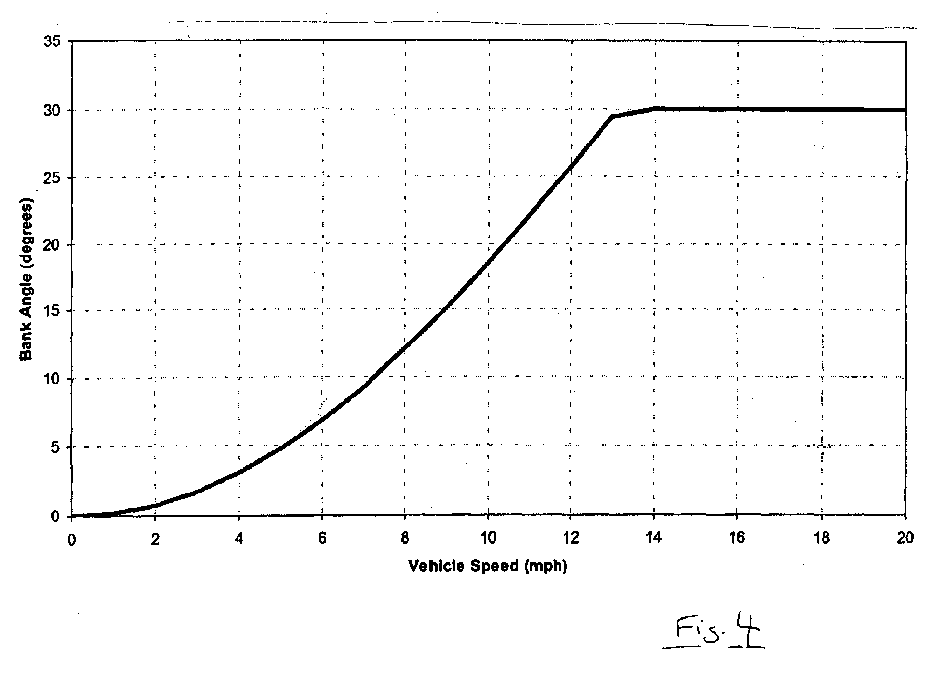

Thus it can be seen that at low speed the maximum lateral acceleration is a function of speed. The definition of low speed is that the lateral acceleration is inside the frictional limit or the roll limit of the machine, whichever is the lower. Given that

$$A_y = g.\tan(\phi)$$

then it is clear that the maximum allowable bank angle is therefore a function of speed in the low speed region, of the form shown in figure 4.

This scaling is applied to the "roll demand" function from the yoke such that, for example, at 6 mph the full travel of the steering yoke can only possibly demand 7° of roll angle. In this way the operator does not need any special knowledge of the ability of the machine to balance itself or the amount of steering lock available in order to mitigate their demands; the machine preserves stability by knowing not to "ask" for more roll angle than can be controlled with the maximum amount of steering lock. This mitigation of roll demand with speed facilitates the use of this machine by an unskilled operator.

As speed rises, the vehicle is capable of using its full roll angle capability and the bank angle of the vehicle is controlled to this, giving the flat, speed-independent region on the right of the graph in figure 4.

The controller 76 continuously monitors the dynamic state of the vehicle during the turn and modifies the operation of the steering adjustment mechanism 84 as deemed appropriate to maintain the desired roll angle. As the vehicle exits the turn and the user moves the steering yoke 72 to return the vehicle wheels to the straight ahead position it will be understood that the body of the vehicle will start to roll upright. The controller 76, taking into account the movement of the steering yoke 72 by the user, operates the steering adjustment mechanism 84 to arrest the motion of the vehicle at the upright position.

The controller 76 may optionally operate the roll brake 118 to arrest the motion of the body at the upright position where the speed of the vehicle is determined by the controller 76 to have dropped below a threshold value where tilting of the vehicle is determined to be possible, for example as a result of adverse camber of the ground over which the vehicle is travelling.

Where vehicle is travelling at low speeds and the roll brake 118 is applied by the controller 76, as described above, to provide the vehicle with adequate roll stiffness to prevent tipping, the controller causes the steerable axles 112,114 to be moved in a conventional steering manner, i.e. turned into the direction of travel.

While the steering and suspension system 70 aspect of the invention have been described with reference to a four wheel vehicle, it will be appreciated that the system 70 may be equally applicable to other types of vehicles wherein a portion of the body of the vehicle is required to tilt relative to ground supported or engaged control elements of the vehicle. For example, such a steering and suspension system may be employed with a ski type vehicle configured to travel over snow.

**Claims**

1. A method of controlling the operation of a free leaning vehicle, the vehicle having a body, a plurality of ground engaging supports of which at least some are movable so as to effect steering of the vehicle, and a roll brake operable to selectively prevent or allow the body and steerable supports to tilt relative to the ground,
   wherein the vehicle further includes a control system configured to effect movement of the steerable supports and the operation of the roll brake, the control system including a steering input means operable by an operator of the vehicle to effect steering inputs to the vehicle, a steering output means operable by the control system to move the steerable supports in either a pro-steer mode where the steerable supports move in the same direction as a steering input made to the steering input means, or a counter-steer mode where the steerable supports move in a counter direction to a steering input made to the steering input means, and a plurality of sensors arranged on the vehicle to provide the control system with information relating to operative parameters of the vehicle,
   **characterised in that** the control system is arranged to permit the vehicle to operate in one of two steering modes comprising;
   a first steering mode where the roll brake is engaged so as to prevent tilting of the vehicle and the steerable supports are movable only in the pro-steer mode; and
   a second steering mode where the roll brake is disengaged so as to permit tilting of the vehicle and the steerable supports, and the steerable supports are movable in both the pro-steer and counter-steer modes,
   the control system being arranged to select and switch between the steering modes in relation to demand for the roll brake as determined by the by the control system in response to sensed operative parameters of the vehicle.

2. A method as claimed in claim 1 wherein the operative parameters of the vehicle sensed by the control system include one or more of vehicle speed in the direction of travel, vehicle acceleration in the direction of travel, vehicle tilt angle, rate of change of vehicle tilt angle, vertical acceleration of the vehicle, lateral acceleration of the vehicle, steering inputs made to the steering input means, and steering angle of the steerable supports.

3. A method as claimed in claim 1 or claim 2 where the control system is configured to apply the roll brake as the vehicle comes to a stop so as to prevent tilting of the vehicle.

4. A method as claimed in any preceding claim wherein the control system is configured to apply the roll brake at low speed where sensed operative parameters of the vehicle indicate to the control system that uncontrolled tilting of the vehicle is likely to occur.

5. A method as claimed in claim 4 wherein the control system is configured to apply the roll brake when the control system senses the vehicle to be tilting below a predetermined tilt angle.

6. A method as claimed in claim 5 wherein the predetermined tilt angle is related to the speed of the vehicle in the direction of travel.

7. A method as claimed in any preceding claim where the vehicle is in the second steering mode, wherein the control system is further configured to operate the roll brake to counteract unwanted tilting of the vehicle due to externally applied forces such as wind loading.

8. A method as claimed in claim 7 wherein the control system engages of the roll brake partially until it is sensed that the externally applied forces promoting unwanted tilting of the vehicle are no longer present, whereafter the roll brake is disengaged by the control system.

9. A method as claimed in claim 7 wherein the control system engages of the roll brake fully until it is sensed that the externally applied forces promoting unwanted tilting of the vehicle are no longer present, whereafter the roll brake is disengaged by the control system.

10. A method as claimed in any preceding claim where the vehicle is in the second steering mode, wherein the control system is configured to limit the tilt angle of the vehicle irrespective of the steering input made by an operator to the steering input means.

11. A method as claimed in claim 10 wherein the degree by which the tilt angle is limited is variable and related to vehicle speed in the direction of travel.

**Patentansprüche**

1. Ein Verfahren zur Steuerung des Betreibens eines sich frei neigenden Fahrzeuges; das Fahrzeug einen Fahrzeugkörper und eine Vielzahl von mit dem Boden verbindbaren Abstützteilen aufweiset, und dabei einige Abstützteile verfahrbar ausgebildet sind und **dadurch** das Fahrzeug lenkbar ist; ferner eine betriebsbereite Walzenbremse umfasst, die um wahlweise es ermöglicht oder verhindern, dass der Fahrzeugkörper und die lenkenden Abstützteile relativ zu dem Boden kippbar sind,

und ferner das Fahrzeug ein Steuersystem umfasst, das so konfiguriert ist, dass es die Bewegungen der lenkenden Abstützteile und den Betrieb der Walzenbremse ausführt; das Steuersystem Lenkeingabemittel umfasst, die durch einen Fahrzeugbedienungspersonal bedienbar sind, um hierdurch Lenkimpulse an das Fahrzeug weiter zugeben; ferner ein Lenkausgabemittel umfasst, das durch ein Steuersystem anfahrbar ist, um die lenkenden Abstützteile entweder in einen pro-lenkbaren Modus zu verfahren, in denen die lenkbaren Abstützteile in die gleiche Richtung weisen, wie sie durch die Steuereingabe über die Steuereingabemittel ausgeführt worden sind, oder ein gegenlenkbarer Modus, in denen die lenkbaren Abstützteile in eine Gegenrichtung weisen die durch die Steuereingabe über die Lenkeingabemittel verfahrbar sind, und eine Vielzahl von Sensoren, die so an dem Fahrzeug angeordnet sind, dass das Steuersystem mit Informationen bezüglich der Betriebsparameter des Fahrzeuges versorgbar ist, **dadurch gekennzeichnet, dass** das Steuersystem so ausgebildet ist, dass es dem Fahrzeug hierdurch ermöglicht wird in einem von zwei Lenkmodi arbeiten zu können; umfassend;

einen ersten Lenkmodus, wobei hier die Walzenbremse so arbeitet, dass hierdurch ein kippen des Fahrzeuges verhinderbar ist und die lenkbaren Abstützteile nur in den pro-lenkbaren Modus verfahrbar sind; und

ein zweiter Lenkmodus, wobei hier die Walzenbremse ausgekoppelt ist, um hierdurch ein Kippen des Fahrzeuges und der lenkenden Abstützteile zu erlauben, und die lenkenden Abstützteile in den Pro-Lenkmodus und den Gegen-Lenkmodus verfahrbar ist;

und das Steuersystem so ausgebildet ist, dass es die Auswahl zwischen den Lenkmodi in Abhängigkeit von den Anforderungen der Walzenbremse umschaltet, so wie es von dem Steuersystem in Abhängigkeit von den erfassten Betriebsparametern des Fahrzeuges vorherbestimmt worden ist.

2. Ein Verfahren wie gemäß Anspruch 1 beansprucht, wobei die Betriebsparameter des Fahrzeuges von dem Steuersystem erfassbar sind und die Geschwindigkeit des Fahrzeuges in der Fahrtrichtung, die Beschleunigung des Fahrzeuges in Fahrtrichtung, den Neigungswinkel des Fahrzeuges, die Änderungsrate des Neigungswinkels des Fahrzeuges, die vertikale Beschleunigung des Fahrzeuges, die laterale Beschleunigung des Fahrzeuges, die Lenkeingabe die an die Lenkeingabemittel weitergeleitet werden, und den Lenkeinschlagswinkel der lenkbaren Abstützteilen umfassen.

3. Ein Verfahren wie gemäß Anspruch 1 oder Anspruch 2 beansprucht, wobei das Steuersystem so konfiguriert ist, dass die Walzenbremse zum Anhalten des Fahrzeuges dient und gleichzeitig hierdurch ein umkippen des Fahrzeuges verhinderbar ist.

4. Ein Verfahren wie gemäß nach einem oder mehreren der vorhergehenden Ansprüche beansprucht, wobei das Steuersystem so konfiguriert ist, dass die Walzenbremse bei geringer Geschwindigkeit Anwendung findet, sobald die erfassten Betriebsparameter des Fahrzeuges dem Steuersystem anzeigen, dass ein unkontrolliertes Umkippen des Fahrzeuges auftreten kann.

5. Ein Verfahren wie gemäß in Anspruch 4 beansprucht, wobei das Steuersystem so konfiguriert ist, dass die Walzenbremse Anwendung findet, sobald das Steuersystem einen Neigungswinkel erfasst, der unter einem vorherbestimmten Neigungswinkel liegt.

6. Ein Verfahren wie gemäß in Anspruch 5 beansprucht, wobei der vorherbestimmte Neigungswinkel abhängig von der Geschwindigkeit des Fahrzeuges in seiner Reiserichtung ist.

7. Ein Verfahren wie gemäß nach einem oder mehreren der vorhergehenden Ansprüche beansprucht, wobei sich das Fahrzeug in den zweiten Lenkmodus befindet und das Steuersystem des weiteren so konfiguriert ist, um die Walzenbremse dazu zu verwenden, um ein ungewolltes Neigen des Fahrzeuges aufgrund von extern angreifenden Kräften, die beispielsweise durch Windböen verursacht werden, zu verhindern.

8. Ein Verfahren wie gemäß in Anspruch 7 beansprucht, wobei das Steuersystem die Walzenbremse teilweise einkuppelt, bis es erfasst, dass ein ungewolltes Neigen des Fahrzeuges durch eine extern eingetragene Kraft nicht mehr vorhanden ist und die Walzenbremse durch das Steuersystem entkoppelt wird.

9. Ein Verfahren wie gemäß in Anspruch 7 beansprucht, wobei das Steuersystem vollständig die Walzenbremse einkuppelt bis es erfasst, dass die extern eingetragene Kraft ein ungewolltes Neigen des Fahrzeuges nicht länger verursachen kann, und die Walzenbremse hiernach durch das Steuersystem entkoppelt werden.

10. Ein Verfahren wie gemäß nach einem oder mehreren der vorhergehenden Ansprüche beansprucht, wobei sich das Fahrzeug in dem zweiten Lenkmodus befindet, und hierbei das Steuersystem so konfiguriert ist, dass es den Neigungswinkel des Fahrzeuges einschränkt und zwar unabhängig von der Lenkeingabe die durch das Betriebspersonal über die Lenkeingabemittel eingeben worden ist.

11. Ein Verfahren wie gemäß in Anspruch 10 beansprucht, wobei die Gradzahl durch die der Neigungswinkel beschränkt ist, variable und in Abhängigkeit von der Geschwindigkeit in Reiserichtung des Fahrzeuges ist.

**Revendications**

1. Procédé de commande pour le fonctionnement d'un véhicule à inclinaison libre, le véhicule présentant un corps, une pluralité d'appuis sur le sol dont au moins quelques uns sont déplaçables afin de réaliser le guidage directionnel du véhicule, et un frein à roulis pouvant être utilisé sélectivement pour empêcher ou permettre au corps et aux appuis directionnels de s'incliner par rapport au sol,
dans lequel le véhicule comprend en outre un système de commande configuré pour mettre en mouvement les appuis directionnels et actionner le frein à roulis, le système de commande comprenant des moyens d'entrée de données directionnelles pouvant être utilisés par un opérateur du véhicule pour entrer des données directionnelles pour le véhicule, des moyens de sortie de données directionnelles pouvant être utilisés par le système de commande pour déplacer les appuis directionnels soit selon un mode pro-directionnel dans lequel les appuis directionnels se déplacent dans la même direction que celle provenant des données d'entrée directionnelles fournies aux moyens d'entrée de données directionnelles, soit selon un mode contre-directionnel dans lequel les appuis directionnels se déplacent dans une direction inverse à celle provenant des données d'entrée directionnelles fournies aux moyens d'entrée de données directionnelles, et une pluralité de capteurs prévus sur le véhicule pour fournir au système de commande des informations concernant les paramètres de fonctionnement du véhicule,

**caractérisé en ce que** le système de commande est prévu pour permettre au véhicule de fonctionner selon un des deux modes directionnels comprenant :

. un premier mode directionnel dans lequel le frein à roulis est en service afin d'empêcher l'inclinaison du véhicule et dans lequel les appuis directionnels sont que déplaçables selon le mode pro-directionnel ; et

. un second mode directionnel dans lequel le frein à roulis est hors service afin de permettre l'inclinaison du véhicule et des appuis directionnels, et dans lequel les appuis directionnels sont déplaçables à la fois selon le mode pro-directionnel et selon le mode contre-directionnel,

le système de commande étant prévu pour choisir et commuter entre les modes directionnels en fonction de la demande de freinage en roulis tel que déterminé par le système de commande en réponse aux paramètres de fonctionnement détectés du véhicule.

2. Procédé selon la revendication 1, dans lequel les paramètres de fonctionnement du véhicule détectés par le système de commande comprennent un ou plusieurs des paramètres suivants : vitesse du véhicule dans le sens du déplacement, accélération du véhicule dans le sens du déplacement, angle d'inclinaison du véhicule, vitesse de changement de l'angle d'inclinaison du véhicule, accélération verticale du véhicule, accélération latérale du véhicule, données d'entrée directionnelles fournies aux moyens d'entrée de données directionnelles et angle de braquage des appuis directionnels.

3. Procédé selon la revendication 1 ou la revendication 2, dans lequel le système de commande est configuré pour actionner le frein à roulis lorsque le véhicule se trouve à l'arrêt afin d'empêcher l'inclinaison du véhicule.

4. Procédé selon l'une quelconque des revendications précédentes, dans lequel le système de commande est configuré pour actionner le frein à roulis à vitesse réduite lorsque les paramètres de fonctionnement détectés du véhicule indiquent au système de commande qu'une inclinaison non contrôlée du véhicule est susceptible de se produire.

5. Procédé selon la revendication 4, dans lequel le système de commande est configuré pour actionner le frein à roulis lorsque le système de commande détecte que le véhicule est en train de s'incliner en dessous d'un angle d'inclinaison prédéterminé.

6. Procédé selon la revendication 5, dans lequel l'angle d'inclinaison prédéterminé est lié à la vitesse du véhicule dans le sens du déplacement.

7. Procédé selon l'une quelconque des revendications précédentes où le véhicule est dans le second mode directionnel, dans lequel le système de commande est en outre configuré pour actionner le frein à roulis pour contrecarrer l'inclinaison non désirée du véhicule causée par des forces extérieures telles que des efforts dus au vent.

8. Procédé selon la revendication 7, dans lequel le système de commande actionne partiellement le frein à roulis jusqu'à ce qu'il détecte l'absence des forces extérieures favorisant l'inclinaison non désirée du véhicule, le frein à roulis étant ensuite désactivé par le système de commande.

9. Procédé selon la revendication 7, dans lequel le système de commande actionne entièrement le frein à roulis jusqu'à ce qu'il détecte l'absence des forces extérieures favorisant l'inclinaison non désirée du véhicule, le frein à roulis étant ensuite désactivé par le système de commande.

10. Procédé selon l'une quelconque des revendications précédentes où le véhicule est dans le second mode directionnel, dans lequel le système de commande est configuré pour limiter l'angle d'inclinaison du véhicule indépendamment des données d'entrée directionnelles fournies par l'opérateur aux moyens d'entrée de données directionnelles.

11. Procédé selon la revendication 10, dans lequel le degré de limitation de l'angle d'inclinaison est variable et lié à la vitesse du véhicule dans le sens du déplacement.

Fig. 1a

Fig. 1b

Fig. 1c

Fig.2a

Fig.2.b

Fig.2c

70

72

78    80    82    74

76

84    86

Fig. 3

Fig. 4

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 9947372 A